# EUROPÄISCHE PATENTSCHRIFT

(11) **EP 2 422 998 B1**
(45) Veröffentlichungstag und Bekanntmachung des Hinweises auf die Patenterteilung: **27.03.2013**
(21) Anmeldenummer: 10008906.9
(22) Anmeldetag: 27.08.2010
(51) Int. Cl.: B60B 37/10, F16B 21/18

(54) **Befestigungselement zur Fixierung eines Rads an einer Radachse**
Fixing element for fixing a wheel to a wheel axle
Elément de fixation destiné à la fixation d'une roue sur un axe de roue

(43) Veröffentlichungstag der Anmeldung: 29.02.2012
(73) Patentinhaber: Viking GmbH, 6336 Langkampfen (AT)
(72) Erfinder: Vogler, Manfred, 5020 Salzburg (AT); Lechner, Hubert, 6341 Ebbs (AT); Buchauer, Siegfried, 6334 Schwoich (AT)
(74) Vertreter: Wasmuth, Rolf

(56) Entgegenhaltungen:
- DE-A1- 3 811 757
- GB-A- 2 263 153
- US-A- 5 902 018

## Beschreibung

Die Erfindung betrifft ein Befestigungselement zur Fixierung eines Rads an einer Radachse der im Oberbegriff des Anspruchs 1 angegebenen Gattung.

Aus der DE 38 11 757 A1 ist ein Befestigungselement zur Fixierung eines Rads an einer Radachse bekannt, das an der Radachse fixiert wird und über das das Rad anschließend geschoben und an dem Befestigungselement eingeklipst wird. Das Befestigungselement ist vollständig von der Außenwand des Rads verdeckt, so dass das Befestigungselement von der Innenseite gelöst werden muss. Hierzu muss ausreichend Bauraum zur Verfugung gestellt werden.

Der Erfindung liegt die Aufgabe zugrunde, ein Befestigungselement zur Fixierung eines Rads an einer Radachse der gattungsgemäßen Art zu schaffen, das eine weitgehend geschlossene Oberfläche des Rads ermöglicht und das nur geringen Bauraum benötigt.

Diese Aufgabe wird durch ein Befestigungselement mit den Merkmalen des Anspruchs 1 gelöst.

Es ist vorgesehen, dass das Befestigungselement eine Radachsenabdeckung besitzt. Dadurch kann das Befestigungselement von außen an dem Rad angeordnet werden und deckt die Radachse ab. Die Radachsenabdeckung und die Mittel zur Fixierung des Befestigungselements an der Radachse liegen üblicherweise in axialer Überdeckung, so dass sie nicht ohne Weiteres in einem Spritzgussverfahren abgeformt werden können. Durch die Ausbildung des Befestigungselements mit zwei zueinander beweglichen Abschnitten ist es möglich, das Befestigungselement mit der Radachsenabdeckung und den Mitteln zur Fixierung des Befestigungselements an der Radachse im Spritzgussverfahren einfach herzustellen. Im Spritzgusswerkzeug werden die Abschnitte so angeordnet, dass keine Bereiche in Überdeckung zueinander liegen. Anschließend werden die Abschnitte aneinander geklappt oder aneinander angelegt und das Befestigungselement kann montiert werden. Dadurch ergeben sich ein einfacher Aufbau und eine einfache Herstellbarkeit bei geringem Bauraum.

Vorteilhaft besitzt das Befestigungselement eine weitgehend geschlossene, von der Trennebene geteilte Außenwand. Durch die Ausbildung der Außenwand als im Wesentlichen geschlossene Oberfläche ist die Ablagerung von Verschmutzungen oder dgl. vermieden, und es ergibt sich ein ansprechendes Erscheinungsbild. Die Trennebene ist dabei vorteilhaft so angeordnet, dass sie die Außenwand teilt. Dadurch ergibt sich ein einfacher konstruktiver Aufbau des Befestigungselements. Vorteilhaft besitzt das Befestigungselement einen Rastrand zur Fixierung an einer Nut der Radachse. Die Radachsenabdeckung und der Rastrand überdecken sich dabei vorteilhaft in senkrechter Richtung zur Außenwand mindestens teilweise. Durch die Überdeckung in senkrechter Richtung, also in axialer Richtung zur Radachse, ergibt sich eine günstige Anordnung. Aufgrund der beiden Abschnitte des Befestigungselements ist die Herstellung des Befestigungselements mit dieser Überdeckung einfach möglich. Vorteilhaft besitzt der Rastrand eine etwa elliptische Innenkontur. Dadurch kann eine sichere Fixierung an der Nut erreicht werden. Gleichzeitig wird das Lösen des Befestigungselements von der Radachse vereinfacht, da der Rastrand im Wesentlichen im schmalsten Bereich der Ellipse aus der Nut gelöst werden muss.

Vorteilhaft besitzt das Befestigungselement eine Aufnahme für den Endabschnitt der Radachse. Die Radachse ist demnach im Bereich des Befestigungselements angeordnet, und zwar im Bereich der Radachsenabdeckung. Die Radachsenabdeckung stellt vorteilhaft ebenfalls eine Begrenzung der Aufnahme dar. Der Rastrand ist vorteilhaft über eine Trägerwand mit der am ersten Abschnitt des Befestigungselements ausgebildeten Außenwand verbunden. Dabei begrenzt die Trägerwand vorteilhaft auch die Aufnahme für den Endabschnitt der Radachse mindestens teilweise. Die Trägerwand ist vorteilhaft ausschließlich an dem ersten Abschnitt des Befestigungselements festgelegt. Dadurch sind die im Bereich des zweiten Abschnitts angeordneten Bereiche der Trägerwand flexibler angebunden. Insbesondere weist die Trägerwand in dem benachbart zum zweiten Abschnitt liegenden Bereich einen Schlitz auf. Beidseitig des Schlitzes sind vorteilhaft Betätigungsabschnitte angeordnet, die zur Außenwand hin voneinander weg geneigt sind. Über die Betätigungsabschnitte kann die Trägerwand aufgeweitet und so der Rastrand aus der Nut der Radachse gelöst werden. Um auf einfache Weise ein Lösen des Befestigungselements von der Radachse zu erlauben, ist vorgesehen, dass die Außenwand benachbart zu den Betätigungsabschnitten eine Eingriffsöffnung aufweist.

Zur Befestigung an dem Rad ist vorgesehen, dass das Befestigungselement mindestens einen Rasthaken besitzt. Insbesondere teilt die Trennebene einen Rasthaken. Vorteilhaft besitzt das Befestigungselement einen Stützrand als Anschlag für den Außenring eines Wälzlagers. Dadurch kann über das Befestigungselement gleichzeitig noch ein Wälzlager, mit dem das Rad an der Radachse gelagert ist, positioniert werden. Das Befestigungselement besteht insbesondere aus Kunststoff und ist in einem Spritzgussverfahren hergestellt.

Vorteilhaft ist das Befestigungselement einteilig ausgebildet. Dadurch ergibt sich ein einfacher Aufbau und wenig Einzelteile. Dadurch, dass die beiden Befestigungselemente zueinander beweglich sind, kann trotz der einteiligen Ausbildung eine einfache Herstellung in einem Spritzgussverfahren erfolgen. Es kann jedoch auch vorgesehen sein, dass die beiden Abschnitte als separate Teile ausgebildet sind, die an der Trennebene aneinander anliegen. Die beiden Teile des Befestigungselements können dabei insbesondere Mittel zur Verbindung miteinander besitzen. Die Mittel zur Verbindung miteinander können beispielsweise ein Scharnier, eine Schnappverbindung oder dgl. sein. Es kann jedoch auch vorgesehen sein, dass die beiden Abschnitte lose aneinander anliegen und durch die Montage an der Radachse in ihrer Position aneinander fixiert werden.

Ausführungsbeispiele der Erfindung werden im Folgenden anhand der Zeichnung erläutert. Es zeigen:
- Fig. 1: eine perspektivische Darstellung eines Häckslers,
- Fig. 2 und 3: perspektivische Explosionsdarstellungen des Rads des Häckslers,
- Fig. 4 und 5: Schnittdarstellungen durch das Rad mit Radachse und Befestigungselement,
- Fig. 6 und 7: perspektivische Darstellungen des Befestigungselements bei aneinander anliegenden Abschnitten des Befestigungselements,
- Fig. 8 und 9: perspektivische Darstellungen des Befestigungselements bei voneinander weg geschwenkten Abschnitten des Befestigungselements,
- Fig. 10: eine Schnittdarstellung eines Ausführungsbeispiels der Radanordnung mit daran angeordnetem Befestigungselement,
- Fig. 11 und Fig. 12: perspektivische Darstellungen eines Ausführungsbeispiels des Befestigungselements mit voneinander weg geschwenkten Abschnitten,
- Fig. 13: eine perspektivische Darstellung eines ersten Abschnitts des Befestigungselements von oben,
- Fig. 14: eine perspektivische Darstellung eines zweiten Abschnitts des Befestigungselements von oben,
- Fig. 15: eine perspektivische Darstellung des ersten Abschnitts des Befestigungselements von unten,
- Fig. 16: eine perspektivische Darstellung des zweiten Abschnitts des Befestigungselements von unten,
- Fig. 17: eine perspektivische Darstellung eines weiteren Ausführungsbeispiels des Befestigungselements von oben,
- Fig. 18: eine perspektivische Darstellung des Befestigungselements aus Fig. 17 von unten,
- Fig. 19: eine perspektivische Darstellung des ersten Abschnitts des Befestigungselements von oben,
- Fig. 20: eine perspektivische Darstellung des zweiten Abschnitts des Befestigungselements von oben,
- Fig. 21: eine perspektivische Darstellung des ersten Abschnitts des Befestigungselements von unten und
- Fig. 22: eine perspektivische Darstellung des zweiten Abschnitts des Befestigungselements von unten.

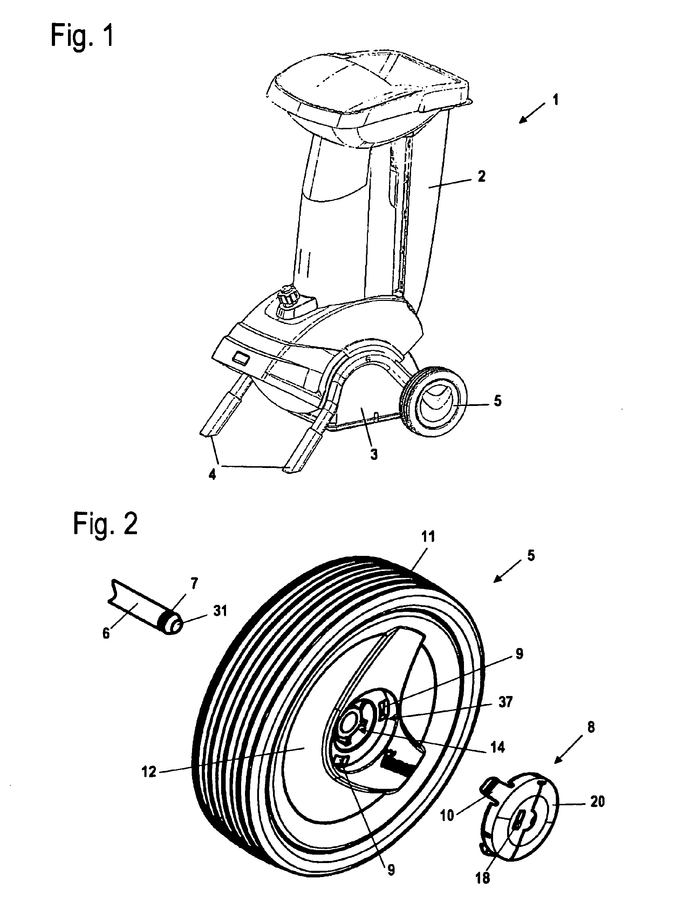

Es ist vielfach bekannt, Räder über Befestigungselemente an Radachsen zu fixieren. Insbesondere bei Gartengeräten ist es gewünscht, eine einfache Befestigungsmöglichkeit für die Räder an den Radachsen vorzusehen. Fig. 1 zeigt als Ausführungsbeispiel für ein Gartengerät einen Häcksler 1. Der Häcksler 1 besitzt eine Zuführgosse 2, die zu einer in einem Gehäuse 3 angeordneten und von einem nicht gezeigten Antriebsmotor angetriebenen Zerkleinerungseinrichtung führt. Der Häcksler 1 besitzt zwei Standfüße 4, die sich auf dem Boden abstützen. Außerdem besitzt der Häcksler 1 zwei Räder 5, von denen in Fig. 1 eines gezeigt ist und die im Betrieb ebenfalls auf dem Boden aufstehen.

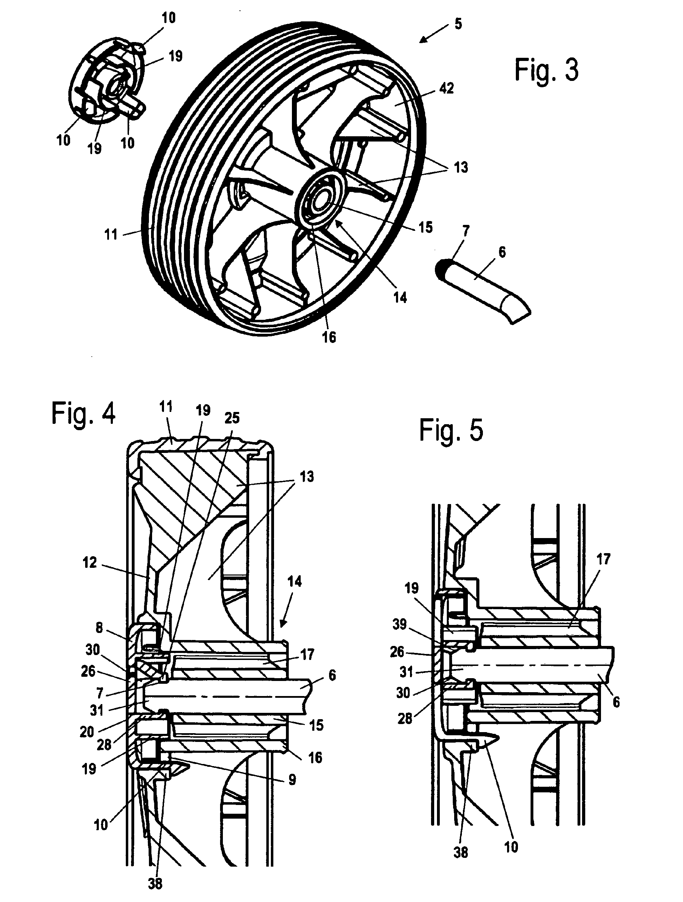

Die Fig. 2 und 3 zeigen die Anordnung aus Rad 5, Radachse 6 und einem Befestigungselement 8 zur Fixierung des Rads 5 an der Radachse 6 in Explosionsdarstellung. Die Radachse 6 besitzt benachbart zu ihrem Endabschnitt 31 eine Nut 7, an der das Befestigungselement 8 fixiert werden kann. Das Befestigungselement 8 besitzt drei Rasthaken 10, die in Rastöffnungen 9 des Rads 5 eingeschoben und in diesen verrastet werden können. Das Rad 5 besitzt an seinem Außenumfang einen Reifen 11, der über eine Scheibe 12 mit der Nabe 14 des Rads 5 verbunden ist. Die Scheibe 12 bildet eine im Wesentlichen geschlossene Außenoberfläche mit einer mittigen Vertiefung 37, in der das Befestigungselement 8 angeordnet werden kann. Auch das Befestigungselement 8 besitzt eine Außenwand 20, die bis auf eine Eingriffsöffnung 18 im Wesentlichen geschlossen ausgebildet ist. Bei Anordnung des Befestigungselements 8 in der Vertiefung 37 ergibt sich dadurch eine im Wesentlichen geschlossene Außenkontur des Rads 5.

Wie Fig. 3 zeigt, besitzt das Rad 5 eine Vielzahl von Versteifungsstreben 13 an seiner Innenseite, die sich von der Nabe 14 radial nach außen bis zu einem Außenring 42 erstrecken, der den Reifen 11 trägt. Die Nabe 14 weist eine Innenhülse 15 auf, in der die Radachse 6 aufgenommen wird, sowie eine Außenhülse 16, die die Innenhülse 15 mit Abstand umgibt.

Wie Fig. 4 zeigt, sind zwischen der Innenhülse 15 und der Außenhülse 16 Verbindungsstreben 17 angeordnet, die die Innenhülse 15 drehfest mit der Außenhülse 16 verbinden. Wie Fig. 4 auch zeigt, besitzt das Befestigungselement 8 einen Rastrand 25, der bei an der Radachse 6 montiertem Rad 5 in die Nut 7 eingreift. Der Rastrand 25 ist über eine Trägerwand 28 mit der Außenwand 20 verbunden. Der Endabschnitt 31 der Radachse 6 ragt in eine im Befestigungselement 8 ausgebildete Aufnahme 30, die von der Trägerwand 28 und von einer Radachsenabdeckung 26 begrenzt ist. Die Radachsenabdeckung 26 bezeichnet den Abschnitt der Außenwand 20 des Befestigungselements 8, der stirnseitig zur Radachse 6 angeordnet ist.

Wie die Fig. 3 bis 5 zeigen, besitzt das Befestigungselement 8 zwei Stützränder 19, die teilzylindrisch ausgebildet sind und die in die Außenhülse 16 ragen. Im Ausführungsbeispiel endet die Innenhülse 15 vor den Stützrändern 19. Fig. 4 zeigt auch die Verrastung des Rasthakens 10 hinter einem Rand 38 der Scheibe 12.

Zur Montage des Rads 5 an der Radachse 6 wird zunächst das Befestigungselement 8 in der Vertiefung 37 des Rads 5 angeordnet, bis die Rasthaken 10 hinter den Rand 38 einhaken. Anschließend wird das Rad mit dem Befestigungselement 8 auf die Radachse 6 geschoben, bis der Rastrand 25 an der Nut 7 einrastet. Um die Montage zu erleichtern, besitzt der Endabschnitt 31 der Radachse 6 eine Fase 39. Dadurch kann das Befestigungselement 8 leicht auf die Radachse 6 aufgeschoben werden.

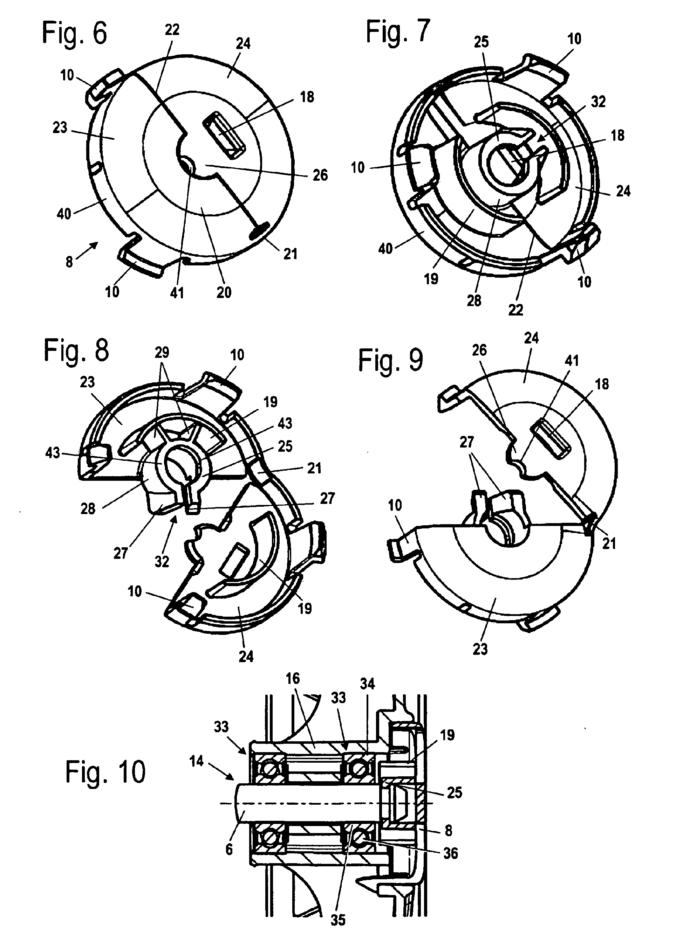

Die Fig. 6 bis 9 zeigen die Gestaltung des Befestigungselements 8 im Einzelnen. Das Befestigungselement 8 ist aus zwei Abschnitten 23 und 24 aufgebaut, die an einer Trennebene 22 aneinander anstoßen. Fig. 5 zeigt einen Schnitt durch das Befestigungselement 8 in der Trennebene 22 und Fig. 4 einen Schnitt in einer um 120° hierzu gekippten Ebene. Wie die Fig. 6 bis 9 zeigen, sind die beiden Abschnitte 23 und 24 des Befestigungselements 8 über einen Gelenkabschnitt 21 miteinander verbunden. Der Gelenkabschnitt 21 1 ist stegförmig ausgebildet und bildet einen Abschnitt des Umfangsrands 40 des Befestigungselements 8, der in die Vertiefung 37 des Rads 5 eingreift. Wie die Figuren zeigen, ist ein Rasthaken 10 von der Trennebene 22 geteilt.

Wie die Fig. 7 und 8 zeigen, ist die Trägerwand 28 etwa zylindrisch ausgebildet und besitzt benachbart zum zweiten Abschnitt 24 einen Schlitz 32. Der Rastrand 25 erstreckt sich am axialen Ende der Trägerwand 28 etwa senkrecht zur Radachse 6. Die Innenkontur des Rastrands 25 ist zur einfacheren Montage und Demontage nicht kreisrund, sondern etwa elliptisch ausgebildet. Damit hat die Innenkontur des Rastrands 25 annähernd die Form eines Langlochs. Die Fixierung des Befestigungselements 8 in der Nut 7 mit dem Rastrand 25 erfolgt nur an den seitlichen Flanken 43 des Rastrands 25, also an den Längsseiten des durch den Rastrand 25 gebildeten Langlochs. Im Bereich des Schlitzes 32 und an der gegenüberliegenden Schmalseite liegt der Rastrand 25 nicht am Nutgrund der Nut 7 der Radachse 6 an. Im Bereich des Schlitzes 32 wird das Befestigungselement 8 zum Lösen von der Radachse 6 aufgebogen. Der dem Schlitz gegenüberliegende Bereich des Rands 25 wird dabei elastisch verformt und bildet annähernd den Drehpunkt der beiden Abschnitte des Rastrands 25 und der Trägerwand 28.

Die Trägerwand 28 und der Rastrand 25 sind ausschließlich am ersten Abschnitt 23 des Befestigungselements 8 fixiert. Der Schlitz 32 ist in dem Abschnitt der Trägerwand 28 ausgebildet, der benachbart zum zweiten Abschnitt 24 zu liegen kommt. Benachbart zum Schlitz 32 sind an der Trägerwand 28 Betätigungsabschnitte 27 ausgebildet, die in Richtung auf die Außenwand 20 voneinander weg geneigt sind. Die Betätigungsabschnitte 27 liegen direkt unterhalb der Eingriffsöffnung 18, wie Fig. 7 zeigt. Zum Lösen des Befestigungselements 8 mit dem Rad 5 von der Radachse 6 kann in die Eingriffsöffnung 18 ein Werkzeug wie beispielsweise ein Schraubendreher eingesteckt werden, und über dieses Werkzeug können die Betätigungsabschnitte 27 nach außen gebogen werden. Dadurch werden die beiden seitlichen Flanken 43 des Rastrands 25 nach außen gebogen, und der Rastrand 25 löst sich so aus der Nut 7. Dann kann das Rad 5 zusammen mit dem Befestigungselement 8 von der Radachse 6 abgezogen werden. Anschließend kann das Befestigungselement 8 durch Lösen der Rasthaken 10 von der Innenseite des Rads 5 vom Rad 5 abgenommen werden.

Wie Fig. 8 zeigt, ist die Trägerwand 28 am ersten Abschnitt 23 des Befestigungselements 8 über Versteifungsstreben 29 mit dem Stützrand 19 verbunden. Auf dieser Seite der Trägerwand 28 ergibt sich damit eine vergleichsweise steife Ausbildung des Rastrands 25.

Wie die Figuren zeigen, ist das Befestigungselement 8 einteilig ausgebildet. Das Befestigungselement 8 besteht vorteilhaft aus Kunststoff und ist in einem Spritzgussverfahren hergestellt. Aufgrund der Ausbildung des Befestigungselements 8 mit zwei Abschnitten 23 und 24 können die Radachsenabdeckung 26 am zweiten Abschnitt 24 und die Trägerwand 28 mit dem Betätigungsabschnitt 27 und dem Rastrand 25 am ersten Abschnitt 23 in einem Spritzgussverfahren hergestellt und entformt werden. Nach der Herstellung im Spritzguss werden die beiden Abschnitte 23 und 24 aneinander geklappt, so dass die Abschnitte 23 und 24 an der Trennebene 22 aneinander anliegen. Die Radachsenabdeckung 26 überdeckt dann den Rastrand 25 in Richtung senkrecht zur Außenwand 20 bzw. in Richtung der Radachse 6. Aufgrund der zweischenkligen Form des Befestigungselements 8 ist eine weitgehend geschlossene Ausbildung der Außenwand 20 möglich. Wie beispielsweise die Fig. 6 und 9 zeigen, ist an der Radachsenabdeckung 26 eine Kerbe 41 1 angebracht, die die geschlossene Außenwand 20 ebenso wie die Eingriffsöffnung 18 unterbricht.

Fig. 10 zeigt die Anordnung des Befestigungselements 8 an einer Nabe 14 eines Rads 5, die lediglich eine Außenhülse 16 besitzt. In der Außenhülse 16 sind zwei Wälzlager 33 zur Lagerung des Rads 5 auf der Radachse 6 angeordnet. Wie Fig. 10 zeigt, ragt der Stützrand 19 im Bereich des Außenrings 34 der Wälzlager 33 in die Außenhülse 16. Dadurch stellt der Stützrand 19 eine axiale Sicherung des Wälzlagers 33 dar. Der Rastrand 25 liegt benachbart zum Innenring 35 und sichert den Innenring 35 des Wälzlagers 33 in axialer Richtung. Das Wälzlager 33 besitzt außerdem Wälzkörper 36, die beispielsweise Kugeln oder Rollen sein können und die zwischen dem Innenring 35 und dem Außenring 34 abrollen.

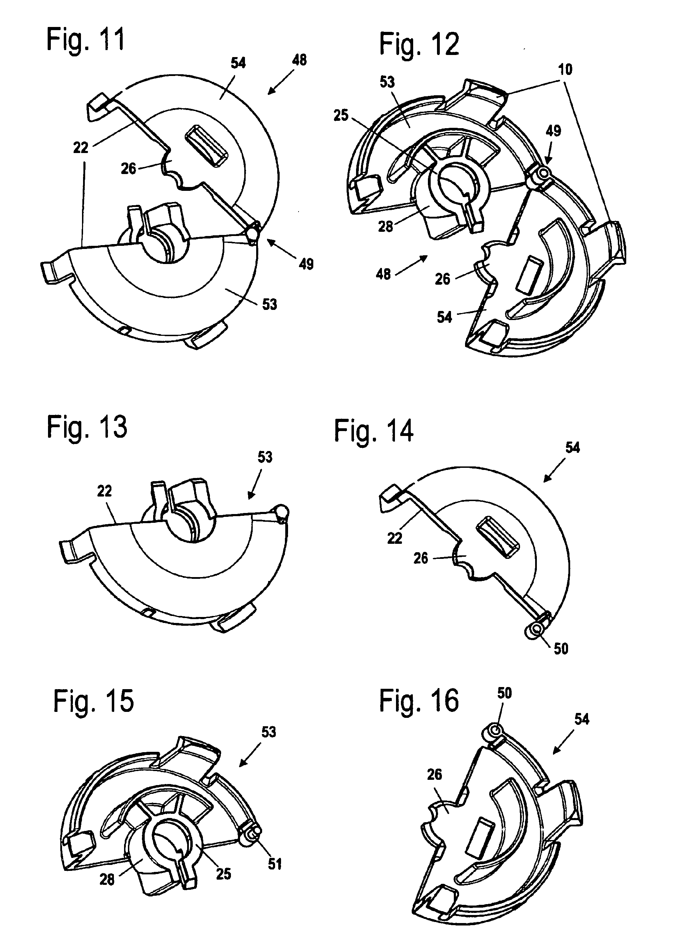

Die Fig. 11 bis 16 zeigen ein weiteres Ausführungsbeispiel eines Befestigungselements 48. Das Befestigungselement 48 umfasst die beiden Abschnitte 53 und 54, die miteinander an einem Scharnier 49 schwenkbar verbunden sind. Die weitere Gestaltung des Befestigungselements 48 entspricht der Gestaltung des Befestigungselements 8. Gleiche Bezugszeichen kennzeichnen dabei einander entsprechende Elemente. Wie die Fig. 14 und 16 zeigen, ist an dem zweiten Abschnitt 54 eine Aufnahme 50 angeformt. In die Aufnahme 50 kann der in Fig. 15 gezeigte Zapfen 51, der am ersten Abschnitt 53 angeformt ist, eingesteckt werden. Dadurch sind die beiden Abschnitte 53 und 54 des Befestigungselements 48 schwenkbeweglich miteinander verbunden. Das Scharnier 49, das durch die Aufnahme 50 und den Zapfen 51 gebildet ist, ersetzt demnach den Gelenkabschnitt 21 des Befestigungselements 8.

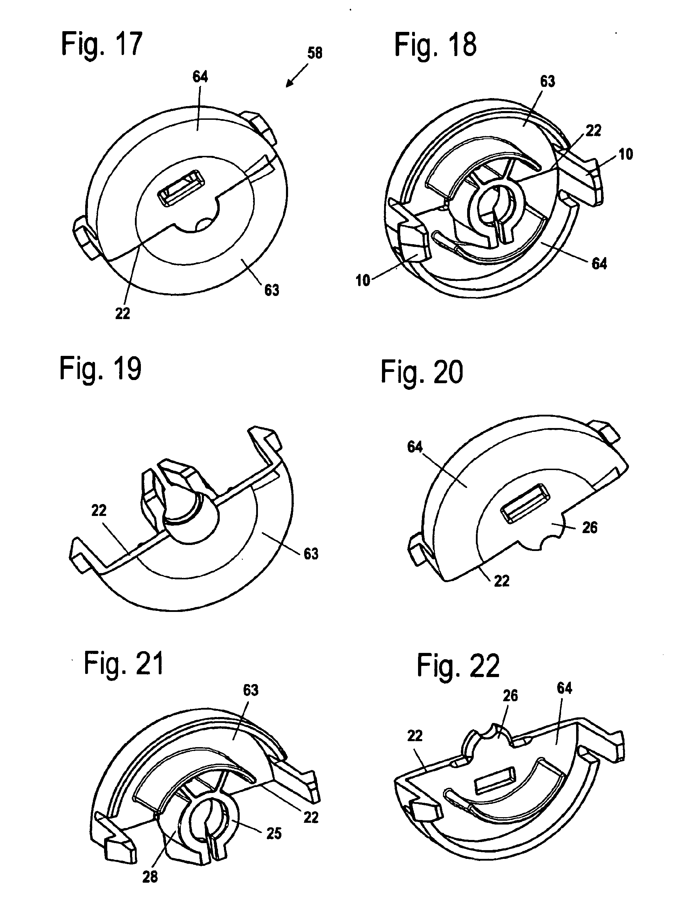

Das in den Fig. 17 bis 22 gezeigte weitere Ausführungsbeispiel eines Befestigungselements 58 besitzt zwei Abschnitte 63 und 64, die vollständig voneinander getrennt sind. Die beiden Abschnitte 63 und 64 liegen an der Trennebene 22 lose aneinander an. Es kann auch vorgesehen sein, dass die beiden Abschnitte 63 und 64 miteinander verbunden sind, beispielsweise über eine Verrastung oder über andere Befestigungsmittel wie Klebstoff oder dgl.. Wie die Fig. 17 bis 22 zeigen, besitzt das Befestigungselement 58 insgesamt zwei Rasthaken 10, die beide durch die Trennebene 22 geteilt sind. Wie Fig. 21 zeigt, ragt die Trägerwand 28 mit dem Rastrand 25, die am ersten Abschnitt 63 angeformt sind, über die Trennebene 22. Wie Fig. 22 zeigt, ragt die Radachsenabdeckung 26 am zweiten Abschnitt 64 über die Trennebene 22 in Richtung auf den ersten Abschnitt 63 des Befestigungselements 58. Vorteilhaft liegen die beiden Abschnitte 63 und 64 nur lose aneinander an und werden durch die Anordnung am Rad 5 aneinander gehalten.

## Patentansprüche

1. Befestigungselement zur Fixierung eines Rads (5) an einer Radachse (6), wobei das Befestigungselement (8) Mittel zur Fixierung an der Radachse (6) und Mittel zur Fixierung an dem Rad (5) besitzt,
**dadurch gekennzeichnet, dass** das Befestigungselement (8) zwei zueinander bewegliche Abschnitte (23, 24) besitzt, die an einer Trennebene (22) voneinander getrennt sind, wobei an dem ersten Abschnitt (23) die Mittel zur Fixierung des Befestigungselements (8) an der Radachse (6) und an dem zweiten Abschnitt (24) eine Radachsenabdeckung (26) angeordnet sind.

2. Befestigungselement nach Anspruch 1,
**dadurch gekennzeichnet, dass** das Befestigungselement (8) eine weitgehend geschlossene Außenwand (20) besitzt, die von der Trennebene (22) geteilt ist.

3. Befestigungselement nach Anspruch 1 oder 2,
**dadurch gekennzeichnet, dass** das Befestigungselement (8) einen Rastrand (25) zur Fixierung an einer Nut (7) der Radachse (6) besitzt.

4. Befestigungselement nach Anspruch 3,
**dadurch gekennzeichnet, dass** die Radachsenabdeckung (26) und der Rastrand (25) sich in senkrechter Richtung zur Außenwand (20) mindestens teilweise überdecken.

5. Befestigungselement nach Anspruch 3 oder 4,
**dadurch gekennzeichnet, dass** der Rastrand (25) eine etwa elliptische Innenkontur besitzt.

6. Befestigungselement nach einem der Ansprüche 3 bis 5,
**dadurch gekennzeichnet, dass** das Befestigungselement (8) eine Aufnahme (30) für den Endabschnitt (31) der Radachse (6) besitzt.

7. Befestigungselement nach Anspruch 6,
**dadurch gekennzeichnet, dass** der Rastrand (25) über eine Trägerwand (28) mit der am ersten Abschnitt (23) des Befestigungselements (8) ausgebildeten Außenwand (20) verbunden ist.

8. Befestigungselement nach Anspruch 7,
**dadurch gekennzeichnet, dass** die Trägerwand (28) die Aufnahme (30) für den Endabschnitt (31) der Radachse (6) mindestens teilweise begrenzt.

9. Befestigungselement nach Anspruch 7 oder 8,
**dadurch gekennzeichnet, dass** die Trägerwand (28) in dem benachbart zum zweiten Abschnitt (24) des Befestigungselements (8) liegenden Bereich einen Schlitz (32) aufweist.

10. Befestigungselement nach Anspruch 9,
**dadurch gekennzeichnet, dass** die Trägerwand (28) beidseitig des Schlitzes (32) Betätigungsabschnitte (27) aufweist, die zur Außenwand (20) hin voneinander weg geneigt sind.

11. Befestigungselement nach Anspruch 10,
**dadurch gekennzeichnet, dass** die Außenwand (20) benachbart zu den Betätigungsabschnitten (27) eine Eingriffsöffnung (18) besitzt.

12. Befestigungselement nach einem der Ansprüche 1 bis 11,
**dadurch gekennzeichnet, dass** das Befestigungselement (8) mindestens einen Rasthaken (10) zur Befestigung an dem Rad (5) besitzt, wobei die Trennebene (22) insbesondere einen Rasthaken (10) teilt.

13. Befestigungselement nach einem der Ansprüche 1 bis 12,
**dadurch gekennzeichnet, dass** das Befestigungselement (8) einen Stützrand (19) als Anschlag für einen Außenring (34) eines Wälzlagers (33) besitzt.

14. Befestigungselement nach einem der Ansprüche 1 bis 13,
**dadurch gekennzeichnet, dass** das Befestigungselement (8) aus Kunststoff besteht und in einem Spritzgussverfahren hergestellt ist.

15. Befestigungselement nach einem der Ansprüche 1 bis 14,
**dadurch gekennzeichnet, dass** das Befestigungselement (8) einteilig ausgebildet ist.

16. Befestigungselement nach einem der Ansprüche 1 bis 14,
**dadurch gekennzeichnet, dass** die beiden Abschnitte (53, 54; 63, 64) als separate Teile ausgebildet sind, die an der Trennebene (22) aneinander anliegen, wobei die beiden Teile des Befestigungselements (48) insbesondere Mittel zur Verbindung miteinander besitzen.

## Claims

1. Fixing element for fixing a wheel (5) to a wheel axle (6), wherein the fixing element (8) has means for fixing to the wheel axle (6) and means for fixing to the wheel (5),
**characterised in that** the fixing element has two portions (23, 24) which can be moved relative to each other and which are separated from each other on a separating plane (22), wherein the means for fixing the fixing element (8) to the wheel axle (6) are arranged on the first portion (23) and a wheel axle cover (26) is arranged on the second portion (24).

2. Fixing element according to claim 1,
**characterised in that** the fixing element (8) has a substantially closed outer wall (20) which is divided by the separating plane (22).

3. Fixing element according to claim 1 or 2,
**characterised in that** the fixing element (8) has an engagement edge (25) for fixing to a groove (7) of the wheel axle (6).

4. Fixing element according to claim 3,
**characterised in that** the wheel axle cover (26) and the engagement edge (25) at least partially overlap in perpendicular direction to the outer wall (20).

5. Fixing element according to claim 3 or 4,
**characterised in that** the engagement edge (25) has an approximately elliptic inner contour.

6. Fixing element according to one of the claims 3 to 5,
**characterised in that** the fixing element (8) has a receiving area (30) for the end portion (31) of the wheel axle (6).

7. Fixing element according to claim 6,
**characterised in that** the engagement edge (25) is connected via a supporting wall to the outer wall (20) formed on the first portion (23) of the fixing element (8).

8. Fixing element according to claim 7,
**characterised in that** the supporting wall (28) at least partially defines the receiving area (30) for the end portion (31) of the wheel axle (6).

9. Fixing element according to claim 7 or 8,
**characterised in that** the supporting wall (28) comprises a slot (32) in the region lying adjacent to the second portion (24) of the fixing element (8).

10. Fixing element according to claim 9,
**characterised in that** the supporting wall (28) comprises actuating portions (27) on both sides of the slot (32), said actuating portions being inclined away from each other towards the outer wall (20).

11. Fixing element according to claim 10,
**characterised in that** the outer wall (20) has an engagement opening (18) adjacent to the actuating portions (27).

12. Fixing element according to one of the claims 1 to 11,
**characterised in that** the fixing element (8) has at least one engagement hook (10) for fixing to the wheel (5), wherein the separating plane (22) divides in particular an engagement hook (10).

13. Fixing element according to one of the claims 1 to 12,
**characterised in that** the fixing element (8) has a supporting edge (19) as a stop for an outer ring (34) of a roller bearing (33).

14. Fixing element according to one of the claims 1 to 13,
**characterised in that** the fixing element (8) is made of plastic and is produced in an injection moulding process.

15. Fixing element according to one of the claims 1 to 14,
**characterised in that** the fixing element (8) is formed in one part.

16. Fixing element according to one of the claims 1 to 14,
**characterised in that** the two portions (53, 54; 63, 64) are formed as separate parts which lie against each other on the separating plane (22), wherein the two parts of the fixing element (48) have in particular means for connection to each other.

## Revendications

1. Elément de fixation pour fixer une roue (5) à un axe de roues (6), étant précisé que l'élément de fixation (8) a des moyens pour la fixation à l'axe de roues (6) et des moyens pour la fixation à la roue (5),
**caractérisé en ce que** l'élément de fixation (8) a deux sections (23, 24) mobiles l'une par rapport à l'autre, qui sont séparées l'une de l'autre au niveau d'un plan de séparation (22), étant précisé que les moyens pour la fixation de l'élément de fixation (8) à l'axe de roues (6) sont disposés sur la première section (23) et qu'un recouvrement d'axe de roues (26) est disposé sur la seconde section (24).

2. Elément de fixation selon la revendication 1,
**caractérisé en ce que** l'élément de fixation (8) a une paroi extérieure (20) en grande partie fermée qui est divisée par le plan de séparation (22).

3. Elément de fixation selon la revendication 1 ou 2,
**caractérisé en ce que** l'élément de fixation (8) a un bord d'encliquetage (25) pour la fixation à une rainure (7) de l'axe de roues (6).

4. Elément de fixation selon la revendication 3,
**caractérisé en ce que** le recouvrement d'axe de roues (26) et le bord d'encliquetage (25) se recouvrent au moins en partie dans le sens perpendiculaire à la paroi extérieure (20).

5. Elément de fixation selon la revendication 3 ou 4,
**caractérisé en ce que** le bord d'encliquetage (25) a un contour intérieur à peu près elliptique.

6. Elément de fixation selon l'une des revendications 3 à 5,
**caractérisé en ce que** l'élément de fixation (8) a un logement (30) pour la section d'extrémité (31) de l'axe de roues (6).

7. Elément de fixation selon la revendication 6,
**caractérisé en ce que** le bord d'encliquetage (25) est relié par une paroi de support (28) à la paroi extérieure (20) formée sur la première section (23) de l'élément de fixation (8).

8. Elément de fixation selon la revendication 7,
**caractérisé en ce que** la paroi de support (28) délimite au moins en partie le logement (30) pour la section d'extrémité (31) de l'axe de roues (6).

9. Elément de fixation selon la revendication 7 ou 8,
**caractérisé en ce que** la paroi de support (28) présente une fente (32) dans la zone voisine de la seconde section (24) de l'élément de fixation (8).

10. Elément de fixation selon la revendication 9,
**caractérisé en ce que** la paroi de support (28) présente, des deux côtés de la fente (32), des sections d'actionnement (27) qui sont inclinées en direction de la paroi extérieure (20) et à l'opposé l'une de l'autre.

11. Elément de fixation selon la revendication 10,
**caractérisé en ce que** la paroi extérieure (20) a une ouverture d'engagement (18), près des sections d'actionnement (27).

12. Elément de fixation selon l'une des revendications 1 à 11,
**caractérisé en ce que** l'élément de fixation (8) a au moins un crochet d'encliquetage (10) pour la fixation à la roue (5), étant précisé que le plan de séparation (22) divise en particulier un crochet d'encliquetage (10).

13. Elément de fixation selon l'une des revendications 1 à 12,
**caractérisé en ce que** l'élément de fixation (8) a un bord d'appui (19) comme butée pour un anneau extérieur (34) d'un palier à roulement (33).

14. Elément de fixation selon l'une des revendications 1 à 13,
**caractérisé en ce que** l'élément de fixation (8) est en matière plastique et est fabriqué selon un procédé de moulage par injection.

15. Elément de fixation selon l'une des revendications 1 à 14,
**caractérisé en ce que** l'élément de fixation (8) est formé d'une seule pièce.

16. Elément de fixation selon l'une des revendications 1 à 14,
**caractérisé en ce que** les deux sections (53, 54; 63, 64) sont conçues comme des parties séparées qui sont appliquées l'une contre l'autre au niveau du plan de séparation (22), étant précisé que les deux parties de l'élément de fixation (48) ont en particulier des moyens pour les relier l'une à l'autre.
